# EUROPEAN PATENT SPECIFICATION

(11) **EP 0 533 465 B1**
(45) Date of publication and mention of the grant of the patent: **18.12.1996**
(21) Application number: 92308451.1
(22) Date of filing: 17.09.1992
(51) Int. Cl.: C08L 63/00, C08K 3/00

(54) **Resin formulation**
Harzzusammensetzung
Composition de résine

(30) Priority: 20.09.1991 GB 9120078
(43) Date of publication of application: 24.03.1993
(73) Proprietor: CIBA-GEIGY AG, 4002 Basel (CH)
(72) Inventor: Wombwell, Paul Terrence, Melbourne, Royston, Hertfordshire (GB); Willis, Philip David, Cherry Hinton, Cambridge (GB); Bull, Christopher Herbert, Trumpington, Cambridge (GB)
(74) Representative: Sharman, Thomas

(56) References cited:
- EP-A- 0 348 193
- BE-A- 692 516
- GB-A- 939 737
- DATABASE WPI Derwent Publications Ltd., London, GB; AN 90-14605(19)
- 46TH ANNUAL CONFERENCE COMPOSITES INSTITUTE February 1991, pages 18-21 NARGIELLO M.R. ET AL 'Improved rheological and suspension characteristics etc.'

## Description

The present invention relates to a filled resin formulation, especially an epoxy resin formulation.

Epoxy resins can be used to make moulded articles by what is called the Automatic Pressure Gelation process (APG). In this process which is described for example in GB 1323343 and EP 0333456 an epoxy resin and curing agent are mixed at a temperature at which they are liquid, usually 40-60°C. The mixture is then passed, under slight pressure, into a mould which is at a high enough temperature for gelling and curing to take place. Further mixture is supplied to the mould under the application of pressure to compensate for shrinkage of the composition until the composition has set.

When epoxy resins are used to make moulded articles in the APG process, the finished product usually contains one or more fillers. These are added to the resin or to the resin/curing agent mixture, before curing. Fillers can be organic or inorganic and are used for various reasons for example as a modifying agent, to improve abrasion resistance, to give special effects or as a bulking agent.

In some cases, e.g. when using a filler as a bulking agent, a large amount is desirable. When using a filler to produce a decorative effect, large particle sizes are usually needed.

In all these cases the filler has a tendency to settle, especially when the resin and curing agent are mixed together and heated and the viscosity of the mixture drops before the resin is cured. This results in a product with an uneven distribution of filler and hence, for instance, an uneven decorative effect and inconsistent mechanical properties.

We have now found that this problem can be overcome by adding to the epoxy resin a small amount of a thixotropic agent and a certain polymer.

Accordingly the present invention provides a liquid epoxy resin composition comprising an epoxy resin, at least one filler having a particle size from 10 to 10,000 micrometer, a thixotropic agent which is a highly dispersed silica, bentonite or a silicate in an amount less than that necessary to impart thixotropic properties and a polymer which dissolves in and thickens a mixture of the resin composition and a curing agent therefor when the mixture is heated prior to curing.

A wide range of fillers may be used, both fine and coarse particles. The filler may be inorganic such as clays, silica, chalk, mica powder, glass powder, glass beads, powdered glass fibre, aluminium hydroxide and magnesium hydroxide, or organic such as powdered poly(vinyl chloride), nylon, polyethylene, polyester or cured epoxy resin.

Mixtures of fillers may be used. For example in order to give a granite-like effect in the moulded product a mixture of calcined china clay and black mica of relatively large particle size may be used, for instance about 0.5 mm.

In general fillers having a particle size of from 10 to 10,000 microns are used, preferably from 50 to 4000 microns. The amount of filler may be up to 400 parts by weight per 100 parts by weight of epoxy resin, preferably up to 300 parts by weight.

Suitable thixotropic agents are highly dispersed silicas, bentonite and silicates. The thixotropic agent is used in an amount less than that necessary to impart thixotropic properties to the resin. It may be used in amounts of from 0.5 to 10 parts by weight per 100 parts by weight of epoxy resin, preferably 1 to 3 parts by weight. The thixotropic agent helps to prevent the filler from settling, especially at the temperature used for mixing the epoxy resin with a curing agent.

At higher temperatures such as those reached just prior to gelling in the mould, the viscosity of the mixture decreases and the thixotropic agent alone is insufficient to prevent the filler from settling. Its performance is enhanced according to the invention by the use of a polymer which dissolves in and thickens the hot mixture of epoxy resin and curing agent. This thickening prevents the filler from settling at temperatures up to the gelling temperature of the mixture.

Any polymer which is soluble in the hot mixture and enhances the effect of the thixotropic agent may be used. Examples of suitable polymers include poly (vinyl butyrals), polyoxyethylenes, poly(vinyl formals), polycaprolactones and polyamides. The polymer may be used in amounts of from 0.5 to 20 parts by weight per 100 parts by weight of epoxy resin, preferably from 1 to 3 parts by weight.

The epoxide resin may be a cycloaliphatic epoxide resin, i.e. a resin which has a least one epoxide group in which the oxygen atom is attached to carbon atoms in a cycloaliphatic ring, a N-glycidylamine, a polyglycidyl ester of a polycarboxylic acid or a polyglycidyl ether of a polyhydric alcohol or phenol. The curing agent for the epoxide resin may be a cycloaliphatic or aromatic polyamine, a polyhydric phenol, a polycarboxylic acid anhydride, or a catalytic curing agent such as a boron trifluoride-amine complex or an imidazole. Preferred resin compositions include those comprising at least one polyglycidyl ether of a polyhydric phenol such as 2,2-bis(4-hydroxyphenyl)propane (bisphenol A), bis(4-hydroxyphenyl)methane (bisphenol F), a phenol formaldehyde novolak or a cresol-formaldehyde novolak, and as curing agent, a polycarboxylic acid anhydride such as phthalic anhydride, tetrahydrophthalic anhydride, methyltetrahydrophthalic anhydride, hexahydrophthalic anhydride, methylhexahydrophthalic anhydride, methylendomethylenetetrahydrophthalic anhydride, alkenylsuccinic anhydrides, maleic anhydride, succinic anhydride, glutaric anhydride or fumaric anhydride.

Epoxide resin compositions used in the method of the invention may also include an accelerator for the cure of the resin with the chosen curing agent. Accelerators suitable for the cure of an epoxide resin with a particular curing agent are well known to those skilled in the art of curing epoxide resins.

The composition of the invention may be mixed with a curing agent and stored for long periods at ambient temperature when a curing agent is used which only cures to a significant extent at higher temperatures. In these cases the thixotropic agent prevents settlement of the filler during storage.

Therefore the invention also provides a composition comprising an epoxy resin, at least one filler, a thixotropic agent in an amount less than that necessary to impart thixotropic properties, a curing agent for the epoxy resin which only substantially cures the resin at elevated temperatures and a polymer which dissolves in and thickens the composition when it is heated prior to curing.

Suitable curing agents for use in this composition include the anhydrides mentioned above.

Other additives conventionally employed in moulding resin compositions may also be included in the composition. Examples of such additives are pigments, dyes, fibres such as glass and carbon fibres, flame retardants, antioxidants, light stabilisers, UV absorbers and surfactants.

Examples of suitable antioxidants include alkylated monophenols, alkylthiomethylphenols, hydroquinones and alkylated hydroquinones, hydroxylated thiodiphenyl ethers, alkylidenebisphenols, O-, N- and S-benzyl compounds, hydroxybenzylated malonates, hydroxybenzyl aromatics, triazine compounds, benzylphosphonates, acylaminophenols, esters and amides of β-(3,5-di-tert-butyl-4-hydroxyphenyl) propionic acid, esters of β-(5-tert-butyl-4-hydroxy-3-methylphenyl) propionic acid, esters of β-(3,5-dicyclohexyl-4-hydroxyphenyl) propionic acid, esters of 3,5-di-tert-butyl-4-hydroxyphenyl acetic acid.

Examples of suitable UV absorbers and light stabilisers include 2-(2′-hydroxyphenyl) benzotriazoles, 2-hydroxybenzophenones, esters of substituted and unsubsrituted benzoic acids, acrylates, nickel compounds, sterically hindered amines, oxalic acid diamides and 2-(2-hydroxyphenyl)-1,3,5-triazines.

The compositions of the invention may be used for the production of mouldings having thin or thick walls (cross sections). They are also particularly suitable for the production of mouldings having a large surface area, at least one large linear dimension or a complex shape. The compositions may be used, for instance, in the moulding of domestic sanitary ware such as sinks, baths, shower trays and basins, sheet slabstock for use in the production of articles such as domestic worktops, chemically resistant containers such as tanks and parts such as pumps, valves and pipes for handling corrosive fluids and impact-resistant mouldings for use in cars and other vehicles, and electrical applications.

The present invention also provides a process for making a cured plastics moulding by introducing a pre-heated curable resin composition to a hotter mould which is at a temperature high enough to initiate curing of the resin and supplying further resin under pressure to compensate for shrinkage of the composition wherein the curable resin comprises an epoxy resin composition as described above.

The invention is illustrated by the following Examples, in which "parts" are parts by weight.

### Example 1

Epoxy resin compositions are made with the following compounds in the amounts specified in Table 1 below.

The epoxy resin is a liquid modified bisphenol A epoxy resin with an epoxy content of 5.2 mol/kg.

Green colouring paste based on a liquid bisphenol A epoxy resin.

Poly(vinyl butyral) sold under the trade name Mowital B70H by Hoechst.

A finely divided silica under the trade name Silica Flour Z 300.

A coarse calcined china clay sold under the trade name Molochite 22/60.

Black mica of particle size about 0.5 mm.

A hydrophobic highly dispersed silica sold under the trade name Aerosil R 202 by Degussa.

**Table 1**

| COMPOUND | PARTS | |
|---|---|---|
| Epoxy resin | 100 | 100 |
| Green colouring paste | 0.1 | 0.1 |
| Poly(vinyl butyral) | 1.0 | 2.0 |
| Finely divided silica | 200 | 200 |
| Highly dispersed silica | 2.5 | 3.0 |
| Coarse calcined china clay | 60 | 60 |
| Black mica | 10 | 10 |

Each of these compositions is mixed with 21 parts of a liquid methyltetrahydrophthalic anhydride hardener. The mixture is then heated to above 120°C and then moulded. In each case the resulting moulded product has an even granite-like effect.

### Example 2

Epoxy resin and hardener compositions are made with the following compounds in the amounts specified in Table 2 below.

The epoxy resin is a liquid bisphenol A epoxy resin with an epoxy content of 5.3 mol/kg.

Brown colouring paste based on liquid bisphenol A epoxy resin.

Sterically hindered phenol antioxidant.

Surfactant sold under the trade name Fluorad FC 430 by 3M.

Liquid methyltetrahydrophthalic anhydride hardener.

A boron trichloride / amine complex accelerator.

Poly(vinyl butyral) sold under the trade name Mowital B70H by Hoechst.

A mixture of finely divided silicas sold under the trade names Silica Fluor Z 300 and M 500.

A hydrophobic highly dispersed silica sold under the trade name Aerosil R 202 by Degussa.

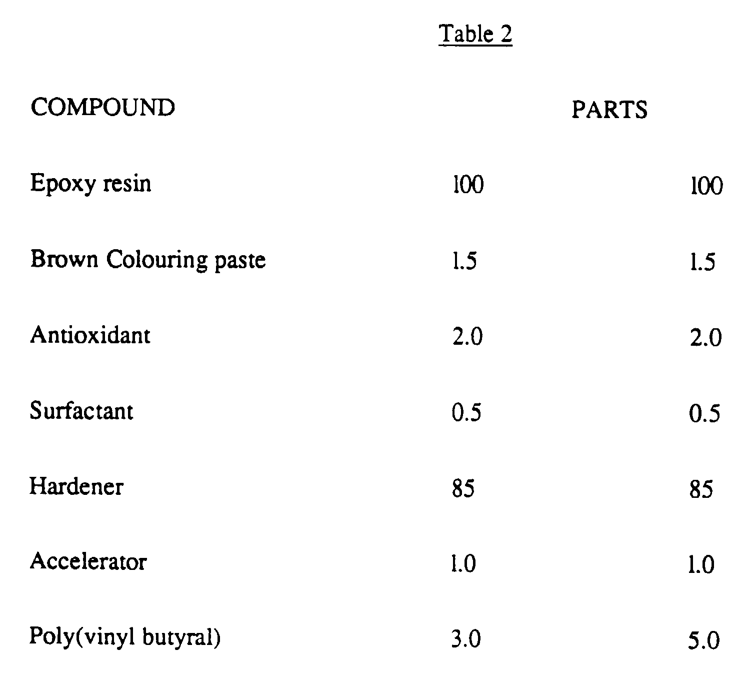

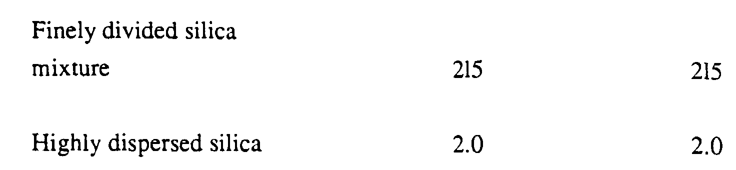

The mixture is a stable free-flowing liquid at room temperature. The mixtures are sprayed onto a vertical, heated metal surface at 150°C. In each case a layer 1 - 2 mm in thickness is obtained which does not flow down the surface of the heated metal. After 5 - 10 minutes the coating cures to a hard tough material.

### Example 3

Seven 50g castings (110 mm in length and 20 mm diameter) are prepared by gelling epoxy resin compositions at 100°C. After the resin is cured the specific gravity (SG) is measured at the top and bottom of the castings. The difference in SG is a measure of filler settlement.

The epoxy resin used is a liquid bisphenol A epoxy resin having an epoxy content of 5.3 mol/kg (100 parts). The filler is a coarse calcined china clay as in Example 1 (120 parts). The curing agent used is liquid methyl tetrahydrophthalic anhydride (85 parts) with 1-methylimidazole (0.25 parts) as accelerator. To the epoxy resin is added, as thixotropic agent, a hydrophobic highly dispersed silica sold under the Trade Name Aerosil R 805. Polymers added are poly(vinyl butyral) sold under the Trade Name Mowital B70H; polyoxyethylene, sold under the Trade Name Polyox Coagulant; and poly(vinyl formal) sold under the Trade Name Siva Formvar. The amounts of thixotropic agent and polymer used in the samples and the SG differences are shown in Table 3.

**TABLE 3**

| THIXOTROPIC AGENT (PARTS) | POLYMER (PARTS) | S G DIFFERENCE |
|---|---|---|
| 3.0 | - | 0.33 |
| 3.0 | 2.0 poly(vinyl butyral) | 0 |
| 3.0 | 2.0 polyoxyethylene | 0 |
| 3.0 | 2.0 poly(vinyl formal) | 0 |
| - | 2.0 poly(vinyl butyral) | 0.26 |
| - | 2.0 polyoxyethylene | 0.29 |
| - | 2.0 poly(vinyl formal) | 0.30 |

It can be seen that no settling occurs when both the thixotropic agent and polymer are used, but some settling occurs if only one of these compounds is used.

### Example 4

Following the procedure of Example 3, five castings are made at a gelling temperature of 120°C.

The epoxy resin is a mixture of 80 parts of that used in Example 3 with 20 parts of butane-1,4-diol diglycidyl ether. The filler is 60 parts of that used in Example I and the hardener is 36 parts of a liquid aromatic amine containing 4,4'-diaminodiphenyl methane. The thixotropic agent is a hydrophilic highly dispersed silica sold under the Trade Name Aerosil 200.

The amount of thixotropic agent and polymer used (as in Example 3) and the SG difference is shown in Table 4.

**TABLE 4**

| THIXOTROPIC AGENT (PARTS) | POLYMER (PARTS) | S G DIFFERENCE |
|---|---|---|
| 1.0 | - | 0.25 |
| 1.0 | 2.0 poly(vinyl butyral) | 0.05 |
| 1.0 | 2.0 polyoxyethylene | 0 |
| - | 2.0 poly(vinyl butyral) | 0.31 |
| - | 2.0 polyoxyethylene | 0.29 |

It can be seen that no or almost no settling occurs when both the thixotropic agent and polymer are used, but some settling occurs when only one of these compounds is used.

### Example 5

Following the procedure of Example 3, seven castings are made at a gelling temperature of 120°C.

The epoxy resin is a mixture of a solid bisphenol A epoxy resin with an epoxy content of about 2.4 mol/kg (50 parts) and a semi-solid epoxy phenol novolak resin with an epoxy content of about 5.6 mol/kg (50 parts). The filler is 80 parts of coarse silica sand. The resin is cured using 70 parts of a curing agent comprising a mixture of tetrahydrophthalic anhydride and phthalic anhydride together with 0.25 parts of 2-ethyl-4-methylimidazole as accelerator. The thixotropic agent is a hydrophobic highly dispersed silica sold under the Trade Name Aerosil R 202. The poly(vinyl butyral) and poly(vinyl formal) are as in Example 3. The polycaprolactone is that sold under the Trade Name CAPA 601M.

The amount of thixotropic agent and polymer used and the SG difference is shown in Table 5.

**TABLE 5**

| THIXOTROPIC AGENT (PARTS) | POLYMER (PARTS) | S G DIFFERENCE |
|---|---|---|
| 2.6 | - | 0.45 |
| 2.6 | 3.0 poly(vinyl butyral) | 0 |
| 2.6 | 2.6 poly(vinyl formal) | 0 |
| 2.6 | 2.6 polycaprolactone | 0 |
| - | 3.0 poly(vinyl butyral) | 0.25 |
| - | 2.6 poly(vinyl formal) | 0.28 |
| - | 2.6 polycaprolactone | 0.25 |

It can be seen that no settling occurs when both the thixotropic agent and polymer are used, but some settling occurs when only one of these compounds is used.

## Claims

1. A liquid epoxy resin composition comprising an epoxy resin, at least one filler having a particle size from 10 to 10,000 micrometer, a thixotropic agent which is a highly dispersed silica, bentonite or a silicate in an amount less than that necessary to impart thixotropic properties and a polymer which dissolves in and thickens a mixture of the resin composition and a curing agent therefor, when the mixture is heated prior to curing.

2. A composition as claimed in claim 1 which also comprises a curing agent for the epoxy resin.

3. A composition as claimed in claim 2 in which the curing agent is one which only substantially cures the resin at elevated temperatures.

4. A composition as claimed in any preceding claim in which the amount of filler is up to 400 parts by weight per 100 parts by weight of epoxy resin.

5. A composition as claimed in any preceding claim in which the amount of thixotropic agent is from 0.5 to 10 parts by weight per 100 parts by weight of epoxy resin.

6. A composition as claimed in any preceding claim in which the polymer is a poly(vinyl butyral), a polyoxethylene, a poly(vinyl formal), a polycaprolactone or a polyamide.

7. A composition as claimed in any preceding claim in which the amount of polymer is from 0.5 to 20 parts by weight per 100 parts by weight of epoxy resin.

8. The use of a composition as claimed in any one of the preceding claims for making moulded articles.

## Patentansprüche

1. Flüssige Epoxidharz-Masse, umfassend ein Epoxidharz, mindestens einen Füllstoff mit einer Teilchengröße von 10 bis 10 000 µm, ein thixotropes Mittel, das hochdisperses Siliciumdioxid, Bentonit oder ein Silicat ist, in einer Menge, geringer als notwendig, um thixotrope Eigenschaften zu verleihen, und ein Polymer, das sich in einem Gemisch aus der Harzmasse und einem Härter dafür löst und esverdickt, wenn das Gemisch vor dem Härten erhitzt wird.

2. Masse nach Anspruch 1, die ebenfalls einen Härter für das Epoxidharz umfaßt.

3. Masse nach Anspruch 2, wobei der Härter das Harz im wesentlichen nur bei erhöhten Temperaturen härtet.

4. Masse nach einem vorangehenden Anspruch, worin die Füllstoffmenge bis zu 400 Gewichtsteile pro 100 Gewichtsteile des Epoxidharzes beträgt.

5. Masse nach einem vorangehenden Anspruch, worin die Menge des thixotropen Mittels 0,5 bis 10 Gewichtsteile pro 100 Gewichtsteile Epoxidharz beträgt.

6. Masse nach einem vorangehenden Anspruch, worin das Polymer Poly(vinylbutyral), ein Polyoxethylen, ein Poly(vinylformal), ein Polycaprolacton oder ein Polyamid darstellt.

7. Masse nach einem vorangehenden Anspruch, worin die Menge an Polymer 0,5 bis 20 Gewichtsteile pro 100 Gewichtsteile Epoxidharz beträgt.

8. Verwendung einer Masse nach einem der vorangehenden Ansprüche zur Herstellung von Formgegenständen.

## Revendications

1. Composition de résine époxyde liquide comprenant une résine époxyde, au moins une charge ayant une granulométrie de 10 à 10 000 micromètres, un agent thixotrope qui est une silice, une bentonite ou un silicate hautement dispersés dans une quantité inférieure à celle qui est nécessaire à conférer des propriétés thixotropes et un polymère qui est soluble dans un mélange d'une composition de résine et qui l'épaissit et d'un agent durcisseur que l'on ajouté lorsqu'on chauffe le mélange avant durcissement.

2. Composition selon la revendication 1, qui comprend également un agent de durcissement pour la résine époxyde.

3. Composition selon la revendication 2, dans laquelle l'agent de durcissement est un agent de durcissement qui ne durcit la résine considérablement qu'à des températures élevées.

4. Composition selon l'une quelconque des revendications précédentes, dans laquelle la quantité de charge est jusqu'à 400 parties en poids pour 100 parties en poids de résine époxyde.

5. Composition selon l'une quelconque des revendications précédentes, dans laquelle la quantité d'agent thixotropique est de 0,5 à 10 parties en poids pour 100 parties en poids de résine époxyde.

6. Composition selon l'une quelconque des revendications précédentes, dans laquelle le polymère est un poly(butyral de vinyle), un poly(oxyéthylène), un poly(formals de vinyle), un polycaprolactone ou un polyamide.

7. Composition selon l'une quelconque des revendications précédentes, dans laquelle la quantité de polymère est de 0,5 à 20 parties en poids pour 100 parties en poids de résine époxyde.

8. Utilisation d'une composition selon l'une quelconque des revendications précédentes, pour la préparation d'articles moulés.
